# FASCICULE DE BREVET EUROPEEN

(11) **EP 2 897 915 B1**
(45) Date de publication et mention de la délivrance du brevet: **16.08.2017**
(21) Numéro de dépôt: 13765989.2
(22) Date de dépôt: 17.09.2013
(51) Int. Cl.: C03B 9/32, C03B 9/36, C03B 9/46, C03B 9/34, C03B 9/347, C03B 9/38, A45D 34/02

(54) **PROCEDE ET INSTALLATION DE FABRICATION D'UN ARTICLE CREUX EN VERRE DE FAIBLE EPAISSEUR**
VERFAHREN UND VORRICHTUNG ZUR HERSTELLUNG EINER DÜNNEN GLASWARE
PROCESS AND APPARATUS FOR MANUFACTURING A THIN HOLLOW GLASSWARE

(30) Priorité: 21.09.2012 FR 1258894
(43) Date de publication de la demande: 29.07.2015
(73) Titulaire: Pochet du Courval, 75010 Paris (FR)
(72) Inventeur: BRUNEAU, Antoine, F-76260 Eu (FR); CASTEX, Nicolas, F-92600 Asnieres Sur Seine (FR); CAVALLUCCI, Denis, F-67700 Otterswiller (FR); LEGASTELOIS, Sylvie, F-92600 Asnieres Sur Seine (FR); PERRIN, Olivier, F-92320 Chatillon (FR)
(74) Mandataire: Lavoix
(86) Numéro de dépôt international: PCT/EP2013/069257
(87) Numéro de publication internationale: WO 2014/044669

(56) Documents cités:
- WO-A1-2012/120119
- FR-A- 1 125 923
- GB-A- 2 436 104
- JP-A- 2004 018 306
- JP-A- 2004 238 242
- US-A- 4 781 955
- US-A- 5 876 478

## Description

La présente invention concerne un procédé et une installation de fabrication d'un article creux en verre de faible épaisseur, comme par exemple un flacon ou tout autre article de ce type. Un article creux en verre obtenu par ce procédé est aussi décrit. D'une manière générale, la fabrication d'articles creux en verre, par exemple de flacons, doit répondre à des contraintes diverses, et notamment à des contraintes de forme, par exemple la position du col, des contraintes d'outillages de fabrication, par exemple pour le démoulage, des contraintes de répartition du verre et du poids du verre et des contraintes spécifiques liées au conditionnement.

Un procédé connu de fabrication de ce type d'articles consiste à introduire dans un moule ébaucheur au moins une paraison de verre fondu à une température déterminée et à préformer dans le moule ébaucheur l'article à partir de la paraison en injectant dans le moule ébaucheur un gaz sous pression, comme par exemple de l'air.

L'ébauche de l'article ainsi réalisée est transférée dans un moule finisseur et l'article est définitivement formé dans ce moule finisseur en injectant également un gaz sous pression.

Les articles creux en verre, et plus particulièrement les flacons destinés à la parfumerie et à la cosmétique, sont réalisés jusqu'à présent avec des répartitions de verre épaisses, ce qui est perçu comme particulièrement esthétique et contribue à véhiculer une image de luxe. Les flacons de parfumerie de l'art antérieur ont des parois d'épaisseur supérieure à 3 mm. Or, la tendance actuelle est de réaliser des articles creux en verre comportant des parois de verre quasi invisibles, afin de véhiculer une image de légèreté, de raffinement, d'élégance et de fragilité apparente.

Pour obtenir ce rendu sur un article creux en verre qui soit industrialisable, plusieurs conditions doivent être réunies, à savoir :
- des épaisseurs de verre très fines,
- des répartitions de verre les plus régulières possibles pour ne pas perturber la perception par l'oeil, et
- une résistance mécanique suffisante pour la manipulation de l'article.

Avec le procédé précité, le réglage du moule ébaucheur et la géométrie de l'ébauche, il peut subsister un excédent de verre sur les parois dudit article.

Cet excédent forme à l'intérieur de l'article une surépaisseur bombée dénommée par les spécialistes «marloquette» ou « chapeau de gendarme ». Cette surépaisseur perturbe la régularité de la répartition du verre.

De plus, compte tenu de la faible épaisseur des parois de l'article, les contraintes de répartition du verre imposent une cadence de fabrication beaucoup plus élevée que celles actuellement pratiquées pour des articles ayant des parois d'épaisseur plus importante. Une interface gazeuse se forme entre l'ébauche et les parois du moule finisseur et se retrouve emprisonnée lors de la phase de soufflage. Cette interface ne peut s'évacuer en raison d'un laps de temps très faible, provoquant ainsi une déformation des faces principales de l'article.

US-A-4 781 955 décrit un procédé et une installation pour souffler un article en verre creux.

US-A-5 876 478 décrit une installation de fabrication d'un article en verre creux comportant un moule ébaucheur et un moule finisseur.

GB-A-2 436104, JP-A-2004 238242, JP-A-2004 018306 et FR-A-1125923 se situent également dans le domaine de la fabrication d'articles en verre.

L'invention a pour but de proposer un procédé et une installation de fabrication d'un article creux en verre de faible épaisseur qui évitent ces inconvénients.

L'invention a donc pour objet un procédé selon la revendication 1.

Selon des modes particuliers de réalisation, le procédé de fabrication peut comprendre l'une ou plusieurs des caractéristiques suivantes, prise(s) isolément ou selon toutes les combinaisons techniquement possibles :
- l'article creux fabriqué comporte une seconde paroi latérale présentant une faible épaisseur, et au cours du formage de l'article dans le moule finisseur, on dirige un excédent de verre vers l'extérieur de la seconde paroi latérale de l'article pour former un second bombé convexe et on élimine le second bombé pour donner à la seconde paroi latérale de l'article une épaisseur sensiblement constante ;
- l'article creux fabriqué comporte un fond présentant une faible épaisseur, et au cours du formage de l'article dans le moule finisseur, on dirige un excédent de verre vers l'extérieur du fond de l'article pour former un bombé convexe et on élimine ce bombé pour donner au fond de l'article une épaisseur sensiblement constante ;
- au cours du formage de l'article dans le moule finisseur, on canalise vers l'extérieur de ce moule finisseur le gaz se formant entre la paroi latérale de l'article et une paroi interne du moule finisseur ;
- on élimine le bombé extérieur de la paroi latérale de l'article par au moins une opération de taille, suivie d'au moins une opération de polissage de la face extérieure de la paroi latérale de l'article.

L'invention a également pour objet une installation de fabrication d'un article creux en verre comportant au moins une paroi latérale de faible épaisseur, ladite installation comprenant :
- au moins un distributeur de paraisons de verre fondu,
- un moule ébaucheur comportant une empreinte destinée à recevoir successivement au moins une paraison de verre fondu,
- des moyens de formation dans le moule ébaucheur d'une ébauche dudit article,
- des moyens de transfert de l'ébauche dans une empreinte d'un moule finisseur,
- des moyens de formation dans le moule finisseur de l'article,
caractérisée en ce que l'empreinte du moule finisseur comporte au moins une partie latérale munie d'une cavité concave pour former sur la paroi latérale de l'article un bombé convexe dirigé vers l'extérieur dudit article et en ce que l'installation comprend des moyens d'élimination du bombé pour donner à la paroi latérale de l'article une épaisseur sensiblement constante.

Selon des modes particuliers de réalisation, l'installation de fabrication peut comprendre l'une ou plusieurs des caractéristiques suivantes, prise(s) isolément ou selon toutes les combinaisons techniquement possibles :
- l'article comportant en outre une seconde paroi latérale de faible épaisseur, l'empreinte du moule finisseur comporte un seconde partie latérale munie d'une seconde cavité concave pour former sur la seconde paroi latérale de l'article un second bombé convexe dirigé vers l'extérieur dudit article, et l'installation comprend des moyens d'élimination du second bombé pour donner à la seconde paroi latérale de l'article une épaisseur sensiblement constante ;
- l'article comportant en outre un fond de faible épaisseur, l'empreinte du moule finisseur comporte un fond muni d'une cavité concave pour former sur le fond de l'article un bombé convexe dirigé vers l'extérieur dudit article, et l'installation comprend des moyens d'élimination dudit bombé pour donner au fond de l'article une épaisseur sensiblement constante ;
- le moule finisseur comporte au moins un évent pour canaliser vers l'extérieur dudit moule finisseur du gaz se formant entre la paroi latérale de l'article et une paroi interne du moule finisseur ;
- l'installation comporte des moyens de taille du bombé extérieur de la paroi latérale de l'article et des moyens de polissage de la face extérieure de la paroi latérales dudit article. Un article creux en verre comportant au moins deux parois latérales et un fond, peut être obtenu par le procédé tel que décrit ci-dessus, dans lequel les deux parois latérales ont une épaisseur comprise entre 0,2 mm et 6 mm, de préférence entre 0,5 mm et 3 mm, de préférence encore voisine de l'ordre de 1 mm, et dans lequel le fond a une épaisseur comprise entre 1 mm et 6 mm, de préférence entre 1,5 mm et 4 mm, les faces extérieures du fond et des deux faces latérales étant polies de sorte que le fond présente une épaisseur sensiblement constante et que les faces latérales présentent une épaisseur sensiblement constante.

Les caractéristiques et avantages de l'invention apparaîtront au cours de la description qui va suivre, donnée à titre d'exemple et faite en référence aux dessins annexés, sur lesquels :
- la Figure 1 est une vue schématique d'une partie d'une installation de fabrication d'un article creux en verre de faible épaisseur, conforme à l'invention.
- les Figures 2 à 6 sont des vues schématiques en coupe verticale respectivement du moule ébaucheur et du moule finisseur de l'installation, conforme à l'invention,
- la Figure 7 est une vue schématique d'un article creux en verre obtenu après l'étape de formage dans le moule finisseur, et
- la Figure 8 est une vue schématique en perspective de l'article creux en verre définitif.

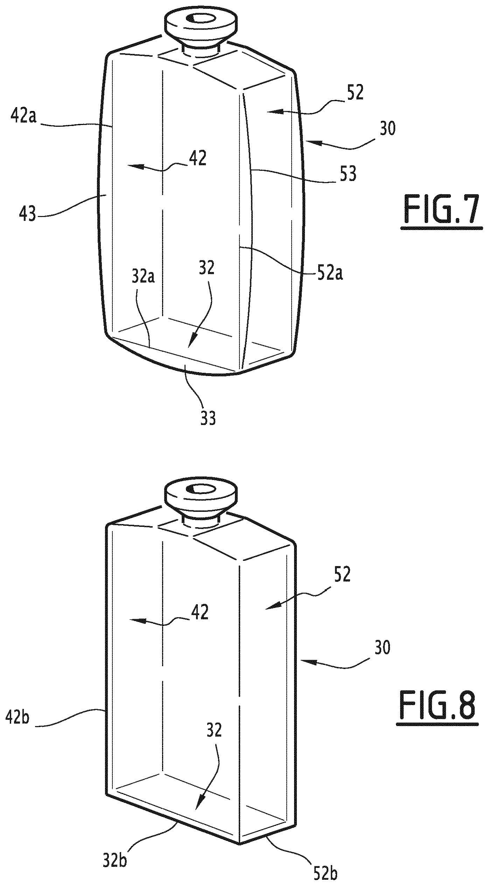

Dans ce qui suit, l'installation pour la mise en oeuvre du procédé selon l'invention sera décrite pour la fabrication d'un article 30 creux en verre, par exemple un flacon de forme générale parallélépipédique comportant des parois latérales, dont deux parois latérales 42, 52 qui forment par exemple les deux petits côtés de l'article 30 et sont avantageusement sensiblement parallèles, et un fond 32, comme représenté sur la Figure 8. Les parois latérales 42, 52 ont une épaisseur comprise entre 0,2 mm et 6 mm, de préférence entre 0,5 mm et 3,0 mm, et de manière encore plus préférée une épaisseur de l'ordre de 1 mm. Le fond 32 a une épaisseur comprise entre 1 mm et 6 mm, de préférence entre 1,5 mm et 4,0 mm.

Les plages données ci-dessus définissent la notion relative de « faible épaisseur », respectivement pour les faces latérales 42, 52 et pour le fond 32.

Bien évidemment, cette installation permet également la fabrication d'articles creux de formes diverses, comportant des parois de faible épaisseur.

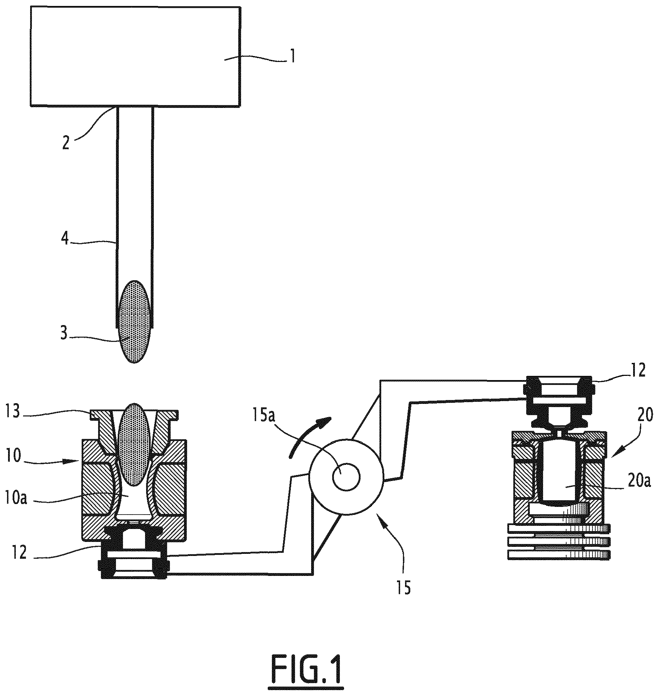

Ainsi que représenté à la Figure 1, l'installation comporte un distributeur 1 de verre fondu placé entre un four, non représenté, et un moule ébaucheur désigné dans son ensemble par la référence 10.

Le distributeur 1 de type connu, délivre à la sortie d'un orifice de coulée 2, une paraison 3 qui, de manière classique, est coupée par des ciseaux, non représentés.

A la sortie du distributeur 1, la paraison 3 tombe dans un conduit 4 qui la conduit dans le moule ébaucheur 10 comportant une empreinte 10a pour former une ébauche 5. A cet effet, l'empreinte 10a du moule ébaucheur 10 comporte au niveau de son entrée, un entonnoir 13.

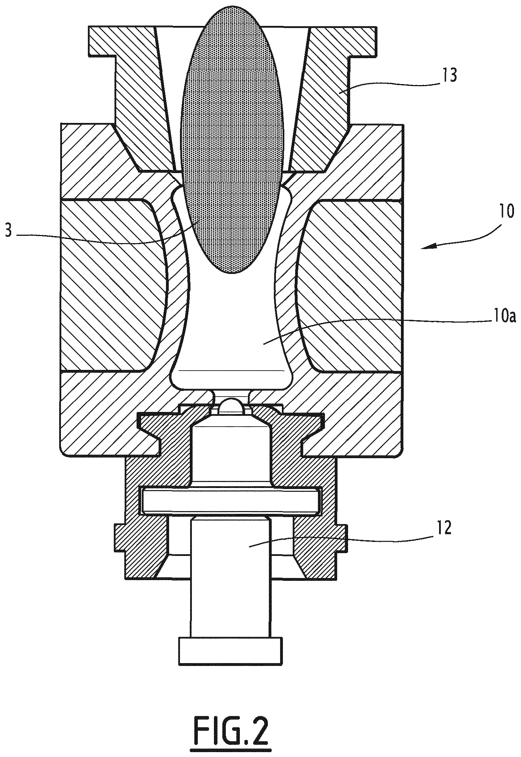

Ainsi que montré schématiquement à la Figure 2, le moule ébaucheur 10 comporte, à sa partie inférieure, une buse de soufflage 12 reliée à un dispositif d'alimentation en gaz sous pression, comme par exemple de l'air, non représenté.

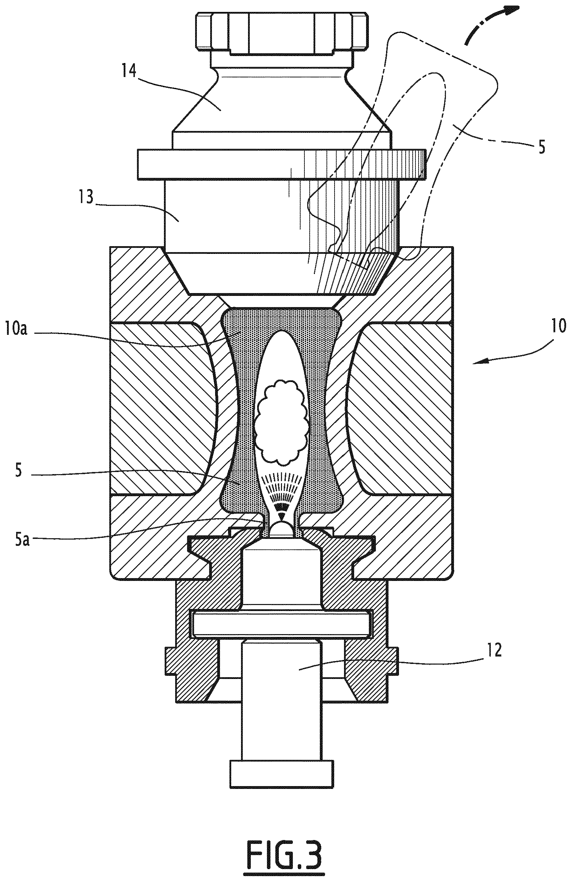

Une fois la paraison 3 introduite dans l'empreinte 10a du moule ébaucheur 10, on place, sur l'ouverture supérieure dudit moule ébaucheur, un fond 14 sur l'entonnoir 13 et on injecte l'air sous pression par la buse de soufflage 12 pour tasser le verre et former sur l'ébauche 5 une bague 5a, comme représenté à la Figure 3. Le fond 14 est ensuite relevé pour permettre de retirer l'entonnoir 13. Ce fond 14 est placé sur le dessus du moule ébaucheur 10 permettant de façonner le fond de l'ébauche 5 et de l'air sous pression est soufflé par la buse 12.

Ainsi, on obtient l'ébauche 5 de l'article 30.

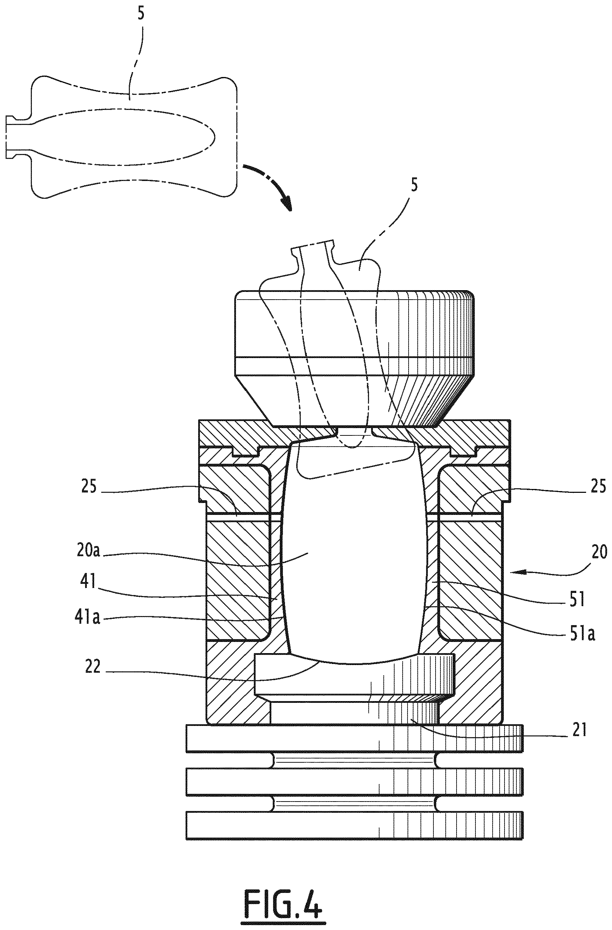

Ensuite, l'ébauche 5 est démoulée et transférée par un bras manipulateur 15 (Figure 1) pivotant autour d'un axe 15a, dans un moule finisseur 20 représenté schématiquement sur les Figures 4 à 6. Ce moule finisseur 20 comporte une empreinte 20a dont la partie inférieure est obturée par un fond amovible 21. Le moule finisseur 20 comprend en outre au moins une partie latérale 41 amovible qui obture un côté de l'empreinte 20a. Avantageusement, le moule finisseur 20 comprend une seconde partie latérale amovible 51 qui obture un autre côté de l'empreinte 20a.

Le fond amovible 21 permet de façonner le fond 32 de l'article 30 à obtenir, tandis que les deux parties latérales 41, 51 permettent de façonner les deux faces latérales 42, 52. Lorsque les parties latérales 41, 51 et le fond 21 sont réunis, ils forment entre eux l'empreinte 20a fermée de façon étanche.

Comme cela apparaît sur les Figures 4 à 6, le fond 21 de l'empreinte 20a comporte une cavité 22 concave et deux cavités latérales 41 a, 51 a concaves.

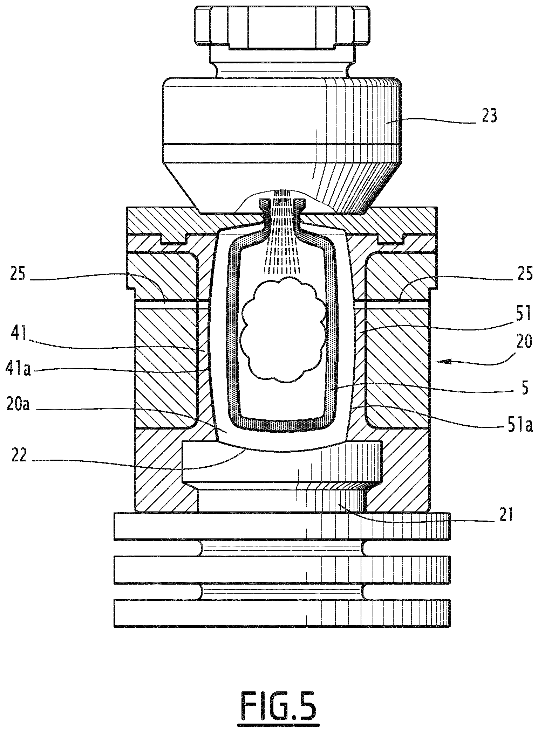

Lorsque l'ébauche 5 a été introduite dans le moule finisseur 20 (Figure 5), on monte sur la partie supérieure du moule finisseur 20, une buse de soufflage 23 qui est reliée à un dispositif d'alimentation en gaz sous pression, comme par exemple de l'air, non représenté.

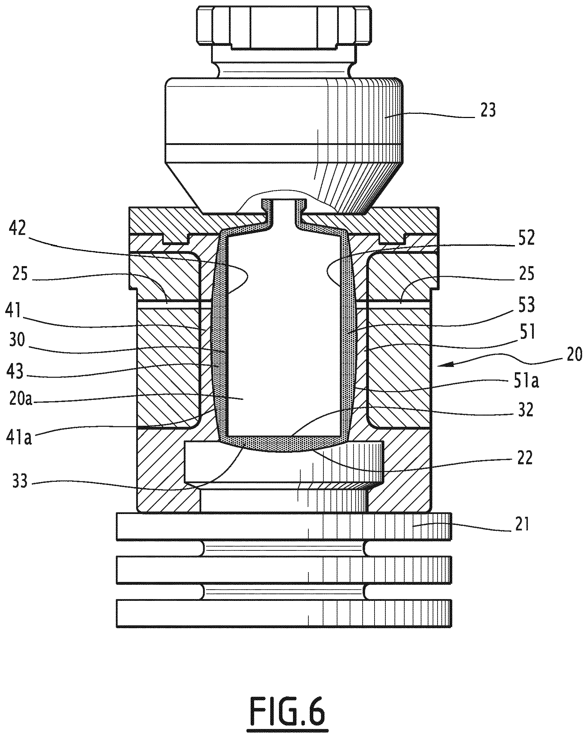

Après cette opération, on souffle dans l'ébauche 5, du gaz sous pression de façon à former l'article 30 (Figure 6).

Au cours du formage de cet article 30 dans le moule finisseur 20, l'excédent de verre vient se loger dans la cavité 22 ménagée dans le fond 21 du moule finisseur 20 en formant vers l'extérieur du fond de l'article 30, un bombé convexe 33, comme représenté sur la Figure 7. Ainsi, la répartition intérieure du fond 32 de l'article 30 s'affaisse dans la cavité 22 et la face intérieure 32a de fond 32 devient horizontale.

De même, au cours du formage de cet article 30 dans le moule finisseur 20, des excédents de verre viennent se loger dans les cavités 41 a, 51 a ménagées dans les parties latérales 41, 51 du moule finisseur 20 et forment vers l'extérieur de l'article 30 deux bombés convexes 43, 53, comme représenté sur la Figure 7. La répartition du verre dans les parois latérales 42, 52 de l'article 30 s'égalise et les faces intérieures 42a, 52a des parois latérales 42, 52 deviennent sensiblement planes et verticales.

L'article 30 obtenu dans le moule finisseur 20 est démoulé de ce moule finisseur 20 en retirant le fond amovible 21 et en écartant les partie latérales 41, 51 l'une de l'autre.

Ensuite, pour éliminer les bombés extérieurs 33, 43, 53 ainsi formés, les opérateurs effectuent trois opérations de taille, suivies d'au moins trois opération de polissage des faces extérieures 32b, 42b, 52b du fond 32 et des parois latérales 42, 52 de l'article 30, afin d'obtenir un fond 32 d'épaisseur sensiblement constante et deux faces latérales 42, 52 d'épaisseur sensiblement constante, ainsi que montré sur la Figure 8.

Avantageusement, l'épaisseur du fond 32 et l'épaisseur des parois latérales 42, 52 est constante à plus ou moins 5% par rapport à leurs épaisseurs moyennes.

Lors de l'opération de formage dans le moule finisseur 20, pour permettre au matelas gazeux qui se forme entre les faces principales de l'ébauche 5 et les parois internes de l'empreinte 20a du moule finisseur 20 de s'échapper, le moule finisseur 20 comporte au moins un évent 25 (Figures 4 à 6).

Dans l'exemple de réalisation représenté sur ces figures, chaque évent 25 est formé par un conduit ménagé dans les parois du moule finisseur 20, avantageusement dans l'une ou l'autre des parties latérales 41, 51. Chaque évent 25 comporte intérieurement un élément permettant au gaz de s'échapper et évitant que le verre fondu s'écoule par l'évent 25. Chaque évent 25 peut être constitué par tout autre aménagement dans le moule finisseur 20.

Des traitements chimiques à chaud et/ou à froid peuvent être effectués sur l'article 30, de façon à renforcer la surface extérieure du verre.

Le procédé selon l'invention permet d'obtenir des articles creux en verre de faible épaisseur ayant une répartition homogène du verre et présentant la solidité requise pour ce type d'article, malgré la faible épaisseur des parois latérales et du fond.

## Revendications

1. Procédé de fabrication d'un article creux (30) en verre comportant au moins une paroi latérale (42) de faible épaisseur, procédé dans lequel :
- on introduit dans un moule ébaucheur (10) au moins une paraison (3) de verre fondu,
- on forme dans le moule ébaucheur (10) une ébauche (5) de l'article (30) à partir de ladite au moins une paraison (3),
- on transfère l'ébauche (5) de l'article (30) dans un moule finisseur (20), et
- on forme dans le moule finisseur (20) l'article (30),
**caractérisé en ce que**, au cours du formage de l'article (30) dans le moule finisseur (20), on dirige un excédent de verre vers l'extérieur de la paroi latérale (42) de l'article (30) pour former un bombé (43) convexe et on élimine le bombé (43) pour donner à la paroi latérale (42) de l'article (30) une épaisseur sensiblement constante.

2. Procédé selon la revendication 1, dans lequel :
- l'article creux (30) fabriqué comporte une seconde paroi latérale (52) présentant une faible épaisseur, et
- au cours du formage de l'article (30) dans le moule finisseur (20), on dirige un excédent de verre vers l'extérieur de la seconde paroi latérale (52) de l'article (30) pour former un second bombé (53) convexe et on élimine le second bombé (53) pour donner à la seconde paroi latérale (52) de l'article (30) une épaisseur sensiblement constante.

3. Procédé selon la revendication 1 ou 2, dans lequel :
- l'article creux (30) fabriqué comporte un fond (32) présentant une faible épaisseur, et
- au cours du formage de l'article (30) dans le moule finisseur (20), on dirige un excédent de verre vers l'extérieur du fond (32) de l'article (30) pour former un bombé (33) convexe et on élimine ce bombé (33) pour donner au fond (32) de l'article (30) une épaisseur sensiblement constante.

4. Procédé selon l'une quelconque des revendications 1 à 3, **caractérisé en ce que**, au cours du formage de l'article (30) dans le moule finisseur (20), on canalise vers l'extérieur de ce moule finisseur (20) le gaz se formant entre la paroi latérale (42) de l'article (30) et une paroi interne du moule finisseur (20).

5. Procédé selon l'une quelconque des revendications 1 à 4, **caractérisé en ce que** l'on élimine le bombé (43) extérieur de la paroi latérale (42) de l'article (30) par au moins une opération de taille, suivie d'au moins une opération de polissage de la face extérieure (42b) de la paroi latérale (42) de l'article (30).

6. Installation de fabrication d'un article (30) creux en verre comportant au moins une paroi latérale (42) de faible épaisseur, ladite installation comprenant :
- au moins un distributeur (1) de paraisons (3) de verre fondu,
- un moule ébaucheur (10) comportant une empreinte (10a) destinée à recevoir successivement au moins une paraison (3) de verre fondu,
- des moyens de formation dans le moule ébaucheur (10) d'une ébauche (5) dudit article (30),
- des moyens (15) de transfert de l'ébauche (5) dans une empreinte (20a) d'un moule finisseur (20),
- des moyens de formation dans le moule finisseur (20) de l'article (30), **caractérisée en ce que** l'empreinte (20a) du moule finisseur (20) comporte au moins une partie latérale (41) munie d'une cavité (41 a) concave pour former sur la paroi latérale (42) de l'article (30) un bombé (43) convexe dirigé vers l'extérieur dudit article (30) et **en ce que** l'installation comprend des moyens d'élimination du bombé (43) pour donner à la paroi latérale (42) de l'article (30) une épaisseur sensiblement constante.

7. Installation selon la revendication 6, l'article (30) comportant en outre une seconde paroi latérale (52) de faible épaisseur, l'installation étant **caractérisée en ce que** l'empreinte (20a) du moule finisseur (20) comporte un seconde partie latérale (51) munie d'une seconde cavité (51 a) concave pour former sur la seconde paroi latérale (52) de l'article (30) un second bombé (53) convexe dirigé vers l'extérieur dudit article (30) et **en ce que** l'installation comprend des moyens d'élimination du second bombé (53) pour donner à la seconde paroi latérale (52) de l'article (30) une épaisseur sensiblement constante.

8. Installation selon la revendication 6 ou 7, l'article (30) comportant en outre un fond (32) de faible épaisseur, **caractérisée en ce que** l'empreinte (20a) du moule finisseur (20) comporte un fond (21) muni d'une cavité (22) concave pour former sur le fond (32) de l'article (30) un bombé (33) convexe dirigé vers l'extérieur dudit article (30) et **en ce que** l'installation comprend des moyens d'élimination dudit bombé (33) pour donner au fond (32) de l'article (30) une épaisseur sensiblement constante.

9. Installation selon l'une quelconque des revendications 6 à 8, **caractérisée en ce que** le moule finisseur (20) comporte au moins un évent (25) pour canaliser vers l'extérieur dudit moule finisseur (20) du gaz se formant entre la paroi latérale (42) de l'article (30) et une paroi interne du moule finisseur (20).

10. Installation selon l'une quelconque des revendications 6 à 9, **caractérisée en ce qu'**elle comporte des moyens de taille du bombé (43) extérieur de la paroi latérale (42) de l'article (30) et des moyens de polissage de la face extérieure (42b) de la paroi latérales (42) dudit article (30).

## Patentansprüche

1. Verfahren zur Herstellung einer Glashohlware (30), die mindestens eine dünne Seitenwand (42) umfasst, wobei das Verfahren folgende Schritte umfasst:
- Einbringen in eine Vorform (10) mindestens eines geschmolzenen Glastropfens (3),
- Formen in der Vorform (10) eines Külbels (5) der Ware (30) aus dem mindestens einen Tropfen (3),
- Übertragen des Külbels (5) der Ware (30) in eine Endform (20), und
- Formen der Ware (30) in der Endform (20),
**dadurch gekennzeichnet, dass** im Verlauf des Umformens der Ware (30) in der Endform (20) überschüssiges Glas von der Seitenwand (42) der Ware (30) nach außen geleitet wird, um eine konvexe Wölbung (43) zu bilden, und die Wölbung (43) beseitigt wird, um der Seitenwand (42) der Ware (30) eine im Wesentlichen konstante Dicke zu verleihen.

2. Verfahren nach Anspruch 1, wobei:
- die hergestellte Hohlware (30) eine zweite dünne Seitenwand (52) umfasst, und
- im Verlauf des Umformens der Ware (30) in der Endform (20) überschüssiges Glas von der zweiten Seitenwand (52) der Ware (30) nach außen geleitet wird, um eine zweite konvexe Wölbung (53) zu bilden, und die zweite Wölbung (53) beseitigt wird, um der zweiten Seitenwand (52) der Ware (30) eine im Wesentlichen konstante Dicke zu verleihen.

3. Verfahren nach Anspruch 1 oder 2, wobei:
- die hergestellte Hohlware (30) einen dünnen Boden (32) umfasst, und
- im Verlauf des Umformens der Ware (30) in der Endform (20) überschüssiges Glas von dem Boden (32) der Ware (30) nach außen geleitet wird, um eine konvexe Wölbung (33) zu bilden, und diese Wölbung (33) beseitigt wird, um dem Boden (32) der Ware (30) eine im Wesentlichen konstante Dicke zu verleihen.

4. Verfahren nach einem der Ansprüche 1 bis 3, **dadurch gekennzeichnet, dass** im Verlauf des Umformens der Ware (30) in der Endform (20), das Gas, das sich zwischen der Seitenwand (42) der Ware (30) und einer internen Wand der Endform (20) bildet, aus dieser Endform (20) heraus nach außen kanalisiert wird.

5. Verfahren nach einem der Ansprüche 1 bis 4, **dadurch gekennzeichnet, dass** die äußere Wölbung (43) der Seitenwand (42) der Ware (30) durch mindestens einen Schleifvorgang, gefolgt von mindestens einem Poliervorgang der Außenseite (42b) der Seitenwand (42) der Ware (30) beseitigt wird.

6. Anlage zur Herstellung einer Glashohlware (30), die mindestens eine dünne Seitenwand (42) umfasst, wobei die Anlage Folgendes umfasst:
- mindestens einen Verteiler (1) von Tropfen (3) von geschmolzenem Glas,
- eine Vorform (10), die eine Matrize (10a) umfasst, die dazu gedacht ist, nacheinander mindestens einen Tropfen (3) von geschmolzenem Glas aufzunehmen,
- Mittel zum Bilden eines Külbels (5) der Ware (30) in der Vorform (10),
- Mittel (15) zum Übertragen des Külbels (5) in eine Matrize (20a) einer Endform (20),
- Mittel zum Bilden der Ware (30) in der Endform (20),
**dadurch gekennzeichnet, dass** die Matrize (20a) der Endform (20) mindestens eine Seitenwand (41) umfasst, die mit einem konkaven Hohlraum (41 a) versehen ist, um auf der Seitenwand (42) der Ware (30) eine konvexe Wölbung (43) zu bilden, die von der Ware (30) aus nach außen gerichtet ist, und dass die Anlage Mittel zum Beseitigen der Wölbung (43) umfasst, um der Seitenwand (42) der Ware (30) eine im Wesentlichen konstante Dicke zu verleihen.

7. Anlage nach Anspruch 6, wobei die Ware (30) ferner eine zweite dünne Seitenwand (52) umfasst, wobei die Anlage **dadurch gekennzeichnet, dass** die Matrize (20a) der Endform (20) eine zweite Seitenwand (51) umfasst, die mit einem zweiten konkaven Hohlraum (51 a) versehen ist, um auf der zweiten Seitenwand (52) der Ware (30) eine zweite konvexe Wölbung (53) zu bilden, die von der Ware (30) aus nach außen gerichtet ist, und dass die Anlage Mittel zum Beseitigen der zweiten Wölbung (53) umfasst, um der zweiten Seitenwand (52) der Ware (30) eine im Wesentlichen konstante Dicke zu verleihen.

8. Anlage nach Anspruch 6 oder 7, wobei die Ware (30) ferner einen dünnen Boden umfasst, **dadurch gekennzeichnet, dass** die Matrize (20a) der Endform (20) einen Boden (21) umfasst, der mit einem konkaven Hohlraum (22) versehen ist, um auf dem Boden (32) der Ware (30) eine konvexe Wölbung (33) zu bilden, die von der Ware (30) aus nach außen gerichtet ist, und dass die Anlage Mittel zum Beseitigen der Wölbung (33) umfasst, um dem Boden (32) der Ware (30) eine im Wesentlichen konstante Dicke zu verleihen.

9. Anlage nach einem der Ansprüche 6 bis 8, **dadurch gekennzeichnet, dass** die Endform (20) mindestens ein Luftloch (25) umfasst, um das Gas, das sich zwischen der Seitenwand (42) der Ware (30) und einer internen Wand der Endform (20) bildet, aus dieser Endform (20) heraus nach außen zu kanalisieren.

10. Anlage nach einem der Ansprüche 6 bis 9, **dadurch gekennzeichnet, dass** sie Mittel zum Schleifen der äußeren Wölbung der Seitenwand (42) der Ware (30) und Mittel zum Polieren der äußeren Seite (42b) der Seitenwand (42) der Ware (30) umfasst.

## Claims

1. A process for manufacturing a hollow glass article (30) comprising at least one thin side wall (42), in which process:
- at least one parison (3) of molten glass is introduced into a blank mold (10),
- a blank (5) of the article (30) is formed in the blank mold (10) from said at least one parison (3),
- the blank (5) of the article (30) is transferred into a finishing mold (20), and
- the article (30) is formed in the finishing mold (20),
**characterized in that**, during forming of the article (30) in the finishing mold (20), excess glass is directed towards the exterior of the side wall (42) of the article (30) to form a convex bulge (43) and the bulge (43) is removed to give the side wall (42) of the article (30) a substantially constant thickness.

2. The process according to claim 1, wherein:
- the manufactured hollow article (30) comprises a second thin side wall (52), and during forming of the article (30) in the finishing mold (20), excess glass is directed towards the exterior of the side wall (52) of the article (30) to form a second convex bulge (53) and the second bulge (53) is removed to give the second side wall (52) of the article (30) a substantially constant thickness.

3. The process according to claim 1 or 2, wherein:
- the manufactured hollow article (30) comprises a thin bottom (32), and
- during forming of the article (30) in the finishing mold (20), excess glass is directed towards the exterior of the bottom (32) of the article (30) to form a convex bulge (33) and that the bulge (33) is removed to give the bottom (32) of the article (30) a substantially constant thickness.

4. The method according to any one of claims 1 to 3, **characterized in that**, during forming of the article (30) in the finishing mold (20), the gas forming between the side wall (42) of the article (30) and an inner wall of the finishing mold (20) is channeled towards the exterior of that finishing mold (20).

5. The method according to any one of claims 1 to 4, **characterized in that** the exterior bulge (43) of the side wall (42) of the article (30) is removed by at least one cutting operation, followed by at least one polishing operation for the exterior face (42b) of the side wall (42) of the article (30).

6. A machine for manufacturing a hollow glass article (30) comprising at least one thin side wall (42), said machine comprising:
- at least one molten glass parison (3) distributor (1),
- a blank mold (10) comprising a cavity (10a) designed to successively receive at least one parison (3) of molten glass,
- means for forming a blank (5) of said article (30) in the blank mold (10),
- means (15) for transferring the blank (5) into a cavity (20a) of the finishing mold (20),
- means for forming the article (30) in the finishing mold (20),
**characterized in that** the cavity (20a) of the finishing mold (20) comprises at least one side part (41) provided with a concave cavity (41 a) to form, on the side wall (42) of the article (30), a convex bulge (43) directed towards the exterior of said article (30), and **in that** the machine comprises means for removing the bulge (43) to give the side wall (42) of the article (30) a substantially constant thickness.

7. The machine according to claim 6, the article (30) further comprising a second thin side wall (52), the machine being **characterized in that** the cavity (20a) of the finishing mold (20) comprises a second side part (51) provided with a second concave cavity (51 a) to form, on the second side wall (52) of the article (30), a second convex bulge (53) directed towards the exterior of said article (30), and **in that** the machine comprises means for eliminating the second bulge (53) to give the second side wall (52) of the article (30) a substantially constant thickness.

8. The machine according to claim 6 or 7, the article (30) further comprising a bottom (32), **characterized in that** the cavity (20a) of the finishing mold (20) comprises a bottom (21) provided with a concave cavity (22) to form, on the bottom (32) of the article (30), a convex bulge (33) directed towards the exterior of said article (30), and **in that** the machine comprises means for eliminating the bulge (33) to give the bottom (32) of the article (30) a substantially constant thickness.

9. The machine according to any one of claims 6 to 8, **characterized in that** the finishing mold (20) comprises at least one vent (25) to channel gas forming between the side wall (42) of the article (30) and an inner wall of the finishing mold (20) towards the exterior of said finishing mold (20).

10. The machine according to any one of claims 6 to 9, **characterized in that** it comprises means for cutting the exterior bulge (43) of the side wall (42) of the article (30) and means for polishing the exterior face (42b) of the side wall (42) of said article (30).
